# EUROPÄISCHE PATENTSCHRIFT

(11) **EP 2 913 535 B1**
(45) Veröffentlichungstag und Bekanntmachung des Hinweises auf die Patenterteilung: **28.09.2016**
(21) Anmeldenummer: 14156734.7
(22) Anmeldetag: 26.02.2014
(51) Int. Cl.: F16B 2/06, F16B 2/12, F16B 7/04, H01Q 1/12

(54) **Antennenhalter**
Antenna holder
Support d'antennes

(43) Veröffentlichungstag der Anmeldung: 02.09.2015
(73) Patentinhaber: Engbarth, Hans-Georg, 47608 Geldern (DE); Eyckmann, Heinrich-Bartholomäus, 47608 Geldern (DE)
(72) Erfinder: Engbarth, Hans-Georg, 47608 Geldern (DE); Eyckmann, Heinrich-Bartholomäus, 47608 Geldern (DE)
(74) Vertreter: Fischer, Uwe

(56) Entgegenhaltungen:
- WO-A1-2009/091299
- WO-A1-2014/028830
- DE-A1-102007 022 459
- DE-A1-102008 046 181
- DE-A1-102009 014 653

## Beschreibung

Die Erfindung bezieht sich auf einen Antennenhalter mit den Merkmalen gemäß dem Oberbegriff des Patentanspruchs 1.

Ein derartiger Antennenhalter ist aus der deutschen Offenlegungsschrift 10 2007 022 459 A1 bekannt. Der vorbekannte Antennenhalter weist eine Montagebasis, einen Antennenmast und Haltemittel zur Befestigung des Antennenmastes an der Montagebasis auf. Die Montagebasis umfasst zwei ineinandergreifende Rohre, und zwar ein Außenrohr und ein Innenrohr. Die Haltemittel sind durch ein Klemmelement in Form einer Schelle und ein Gegenklemmelement in Form einer Gegenschelle gebildet, die durch eine Schraubverbindung derart miteinander verbindbar sind, dass die Schelle und die Gegenschelle einen Abschnitt der Montagebasis zwischen ihren Schelleninnenseiten einklemmen.

Die Druckschrift WO 2009/091299 A1 offenbart eine Haltevorrichtung für Rohre. Die Haltevorrichtung umfasst Plattenelemente, die aus Kohlenstofffaserkompositmaterial bestehen. Die Plattenelemente werden ineinander gesteckt und anschließend verklebt.

Die Druckschrift WO 2014/028830 A1 offenbart einen Antennenhalter, wobei ein Klemmelement zwei Endabschnitte und zwei Stützelemente aufweist.

Der Erfindung liegt die Aufgabe zugrunde, einen Antennenhalter anzugeben, der eine Montage besonders großflächiger Antennen ermöglicht.

Diese Aufgabe wird ausgehend von einem Antennenhalter der eingangs angegebenen Art erfindungsgemäß durch die kennzeichnenden Merkmale des Anspruchs 1 gelöst. Vorteilhafte Ausgestaltungen des erfindungsgemäßen Antennenhalters sind in Unteransprüchen angegeben.

Ein wesentlicher Vorteil des erfindungsgemäßen Antennenhalters ist darin zu sehen, dass durch das Gegenstützelement die Haltekraft der Haltemittel vergrößert wird und dadurch die von dem Antennenhalter tragbaren Windlasten größer sind als bei vorbekannten Antennenhaltern.

Erfinderseitig wurde festgestellt, dass eine Verstärkung der Haltekräfte im Bereich des Mastfußes eine besonders große Wirkung auf die resultierende Windlasttragkraft hat. Demgemäß wird es als vorteilhaft angesehen, wenn das Gegenstützelement - entlang der Längsrichtung des Antennenmasts in Richtung Montagebasis gesehen - unterhalb des Mastfußes angeordnet ist und sich in Richtung Mastfuß erstreckt.

Vorzugsweise weist das Klemmelement im Bereich des Mastfußes ein Durchgangsloch auf, in das der Mastfuß zumindest eingeführt ist oder durch das der Mastfuß hindurchgeführt ist. Im Falle einer solchen Ausgestaltung ist es vorteilhaft, wenn das Gegenstützelement - entlang der Mastlängsrichtung in Richtung Montagebasis gesehen - unterhalb des Durchgangsloches liegt und sich in Richtung Durchgangsloch erstreckt.

Das Gegenstützelement ist vorzugsweise durch eine Platte gebildet, die sich unter einem rechten Winkel von der Innenseite des Gegenklemmelements, insbesondere unter einem rechten Winkel von der Innenseite einer Trägerplatte des Gegenklemmelements, in Richtung auf die Montagebasis erstreckt und parallel zwischen den zwei umgebogenen parallelen Endabschnitten des Gegenklemmelements liegt.

Die Platte ist vorzugsweise mit einer Plattenstirnseite an der Innenseite des Gegenklemmelements angeschweißt. Das Gegenstützelement und das Gegenklemmelement können alternativ durch Abschnitte eines einteiligen Bauteils, vorzugsweise eines Gussteiles oder eines Strangpressprofilbauteils, gebildet sein.

Vorzugsweise ist das Gegenklemmelement durch ein Bauteil gebildet. Die zwei parallelen Endabschnitte stehen vorzugsweise in einem rechten Winkel auf einer Trägerplatte des Gegenklemmelements, die parallel zur Montagebasis ausgerichtet ist. Bei dem Bauteil kann es sich beispielsweise um ein Blechteil handeln, dessen parallele Endabschnitte durch um einen rechten Winkel umgebogene Abschnitte der Trägerplatte gebildet sind.

Das Gegenstützelement ist bevorzugt mittig zwischen den zwei parallelen Endabschnitten des Gegenklemmelements angeordnet. Alternativ kann das Gegenstützelement auch an anderer Stelle zwischen den parallelen Endabschnitten angeordnet sein; auch ist es möglich, zur Abstützung mehrere Gegenstützelemente zwischen den parallelen Endabschnitten anzuordnen.

Das Gegenklemmelement kann ein rinnenförmiges Teil aufweisen, das auf der Unterseite des Außenrohres der Montagebasis flächig anliegt und durch eine Schraubverbindung in Richtung auf die Unterseite der Montagebasis gezogen wird.

Als besonders vorteilhaft wird es angesehen, wenn auf der Innenseite des Klemmelements mindestens ein Stützelement angeordnet ist, das sich in Richtung auf die Montagebasis erstreckt und sich auf der Montagebasis abstützt. Durch das Stützelement wird die Haltekraft der Haltemittel vergrößert, so dass die von dem Antennenhalter tragbaren Windlasten besonders groß sind.

Wie erwähnt, wurde erfinderseitig festgestellt, dass eine Verstärkung der Haltekräfte im Bereich des Mastfußes eine besonders große Wirkung auf die resultierende Windlasttragkraft hat. Demgemäß wird es als vorteilhaft angesehen, wenn das Stützelement - entlang der Längsrichtung des Antennenmasts in Richtung Montagebasis gesehen - unterhalb des Mastfußes angeordnet ist.

Besonders vorteilhaft ist es, wenn das Klemmelement im Bereich des Mastfußes ein Durchgangsloch aufweist, in das der Mastfuß zumindest eingeführt ist oder durch das der Mastfuß hindurchgeführt ist und das Stützelement zumindest abschnittsweise unterhalb des Durchgangsloches liegt.

Besonders bevorzugt passiert das Stützelement - entlang der Längsrichtung des Antennenmasts in Richtung Montagebasis gesehen - in einer Ebene unterhalb des Durchgangsloches die Mitte des Durchgangsloches.

Bevorzugt ist der Mastfuß durch das Durchgangsloch hindurchgesteckt. Der durch das Durchgangsloch hindurch geführte Abschnitt des Mastfußes liegt vorzugsweise auf dem Stützelement auf. Vorzugsweise ist der Mastfuß an dem Stützelement befestigt, vorzugsweise angeschweißt.

Besonders vorteilhaft ist es, wenn der Mastfuß sowohl auf der der Montagebasis abgewandten Außenseite des Klemmelements an dem Klemmelement befestigt, insbesondere verschweißt, als auch auf der der Montagebasis zugewandten Innenseite des Klemmelements an dem Klemmelement befestigt, insbesondere verschweißt, ist. Durch eine doppelseitige Anbindung lässt sich ein Abknicken des Mastfußes auch bei sehr großer Krafteinwirkung verhindern.

Mit Blick auf maximale Haltkräfte an der Schnittstelle zwischen dem Mastfuß und dem Klemmelement wird es als vorteilhaft angesehen, wenn der Mastfuß auf der der Montagebasis abgewandten Außenseite des Klemmelements an dem Klemmelement befestigt, insbesondere mittels einer außenliegenden Schweißnaht verschweißt, ist, der Mastfuß auf der der Montagebasis zugewandten Innenseite des Klemmelements an dem Klemmelement befestigt, insbesondere mittels einer innenliegenden Schweißnaht verschweißt, ist und das Stützelement mit dem durch das Durchgangsloch hindurch geführten Abschnitt des Mastfußes verbunden, insbesondere - vorzugsweise mittels einer zusätzlichen Schweißnaht oder mittels eines oder mehrerer Schweißpunkte, verschweißt ist.

Das Stützelement weist vorzugsweise eine Aussparung auf, die auf der Montagebasis aufliegt bzw. in die die Montagebasis eingreift. Besonders bevorzugt ist das Stützelement im Bereich der Aussparung mit einem oder mehrere Vorsprüngen, insbesondere zackenförmigen Vorsprüngen versehen, die in Richtung Montagebasis gerichtet sind und bei einem Einklemmen der Montagebasis zwischen dem Klemmelement und dem Gegenklemmelement in die Montagebasis eingedrückt werden.

Das Stützelement ist vorzugsweise durch eine Platte gebildet, die sich unter einem rechten Winkel von der Innenseite des Klemmelements, insbesondere unter einem rechten Winkel von der Innenseite einer Trägerplatte des Klemmelements, in Richtung auf die Montagebasis erstreckt und parallel zwischen den zwei umgebogenen parallelen Endabschnitten des Klemmelements liegt.

Die Platte ist vorzugsweise mit einer Plattenstirnseite an der Innenseite des Klemmelements angebracht, insbesondere angeschweißt. Besonders bevorzugt ist das Stützelement sowohl an der Innenseite des Klemmelements als auch an dem Mastfuß angebracht, insbesondere angeschweißt.

Das Stützelement und das Klemmelement können alternativ durch Abschnitte eines einteiligen Bauteils, vorzugsweise eines Gussteiles oder eines Strangpressprofilbauteils, gebildet sein. Auch kann das Stützelement durch einen Abschnitt des Antennenmastes gebildet sein, der sich an den Mastfuß einteilig anschließt oder diesen bildet.

Vorzugsweise ist das Klemmelement durch ein Bauteil gebildet, bei dem zwei parallele Endabschnitte jeweils eine äußere Stützwand bilden, die sich auf der Montagebasis abstützt. Die zwei parallelen Endabschnitte stehen vorzugsweise in einem rechten Winkel auf einer Trägerplatte des Klemmelements, die parallel zur Montagebasis ausgerichtet ist. Bei dem Bauteil kann es sich beispielsweise um ein Blechteil handeln, dessen parallele Endabschnitte durch um einen rechten Winkel umgebogene Abschnitte der Trägerplatte gebildet sind.

Das Stützelement und das Durchgangsloch sind bevorzugt mittig zwischen den zwei parallelen Endabschnitten des Klemmelements angeordnet. Alternativ kann das Stützelement auch an anderer Stelle zwischen den parallelen Endabschnitten angeordnet sein; auch ist es möglich, zur Abstützung mehrere Stützelemente zwischen den parallelen Endabschnitten anzuordnen.

Als besonders vorteilhaft wird es angesehen, wenn - entlang der Längsrichtung des Antennenmastes gesehen - das Stützelement und das Gegenstützelement zumindest abschnittsweise hintereiander liegen oder fluchten.

Das Klemmelement und das Gegenklemmelement sind vorzugsweise baugleich; alternativ kann im Gegenklemmelement auch das Durchgangsloch fehlen, so dass das Klemmelement und das Gegenklemmelement mit der Ausnahme des Durchgangslochs im Klemmelement baugleich sind.

Als besonders vorteilhaft wird es auch angesehen, wenn der Innendurchmesser des Außenrohres der Montagebasis und der Außendurchmesser des Innenelements der Montagebasis derart aufeinander abgestimmt sind, dass das Innenelement im Außenrohr spielfrei, zumindest weitgehend spielfrei, beweglich ist und dass beim Verklemmen der Montagebasis zwischen dem Klemmelement und dem Gegenklemmelement durch ein Verformen des Außenrohres das Innenelement und das Außenrohr derart miteinander verklemmt werden, dass sie relativ zueinander fixiert werden.

Vorzugsweise weisen das Stützelement und das Gegenstützelement einen oder mehrere Vorsprünge auf, die bei einem Verklemmen der Montagebasis zwischen dem Klemmelement und dem Gegenklemmelement in die Montagebasis hineingedrückt werden. Die Vorsprünge sind bevorzugt im Bereich einer Aussparung des Stützelements bzw. des Gegenstützelements angeordnet, die auf dem Außenrohr der Montagebasis aufliegt.

Auch sind an den parallelen Endabschnitten des Klemmelements und des Gegenklemmelements bevorzugt ein oder mehrere Vorsprünge vorhanden, die bei einem Verklemmen der Montagebasis zwischen dem Klemmelement und dem Gegenklemmelement in die Montagebasis hineingedrückt werden. Die Vorsprünge sind bevorzugt im Bereich einer Aussparung des Klemmelements bzw. des Gegenklemmelements angeordnet, die auf dem Außenrohr der Montagebasis aufliegt.

Die Vorsprünge des Stützelements, die Vorsprünge des Gegenstützelements, die Vorsprünge der parallelen Endabschnitte des Klemmelements und/oder die Vorsprünge der parallelen Endabschnitte des Gegenklemmelements werden vorzugsweise bei einem Verklemmen der Montagebasis zwischen dem Klemmelement und dem Gegenklemmelement derart in das Außenrohr hineingedrückt, dass sie das Außenrohr und das Innenelement zumindest auch unterhalb des Mastfußes miteinander verklemmen.

Die Vorsprünge des Stützelements und die des Gegenstützelements werden bei einem Verklemmen der Montagebasis zwischen dem Klemmelement und dem Gegenklemmelement bevorzugt derart auf gegenüberliegenden Rohrseiten in das Außenrohr hineingedrückt, dass sie das Außenrohr und das Innenelement unterhalb des Mastfußes auf gegenüberliegenden Rohrseiten miteinander verklemmen; zu diesem Zweck sind die Vorsprünge des Stützelements und die des Gegenstützelements - entlang der Längsrichtung des Antennenmasts gesehen - vorzugsweise fluchtend angeordnet.

Die Montagebasis weist an ihren Enden zur Montage an benachbarten Dachsparren vorzugsweise jeweils ein Halteelement auf, wobei eines der Halteelemente an dem dem Antennenmast abgewandten Ende des Außenrohres und das andere Halteelement an dem dem Antennenmast abgewandten Ende des Innenelements angebracht ist.

Die Halteelemente sind vorzugsweise Winkelteile, die jeweils einen Auflageabschnitt zur Auflage auf dem zugeordneten Dachsparren und jeweils einen Anlageabschnitt zur seitlichen Anlage an dem zugeordneten Dachsparren aufweisen. Der Auflageabschnitt und der Anlageabschnitt sind bevorzugt durch eine Biegekante getrennt. Die Mittenachse des Außenrohres und die des Innenelements (z. B. Innenrohres) weist zu dem Auflageabschnitt bzw. der Biegekante vorzugsweise einen Abstand auf, der zwischen dem 0,3-fachen und dem 1,5-fachen, besonders bevorzugt zwischen dem 0,5-fachen und dem 1,0-fachen, der Tiefe des Klemmelements liegt; die "Tiefe" ist dabei entlang derjenigen Richtung zu sehen, die senkrecht zur Längsrichtung des Außenrohres oder Innenelements der Montagebasis und senkrecht zur Längsrichtung des Antennenmastes liegt.

Der Anlageabschnitt des Winkelteils, an dem das Innenrohr angebracht ist, weist vorzugsweise mindestens ein, vorzugsweise zwei Löcher auf, die innerhalb der Innenkontur des Innenrohres an der Schnittstelle zu dem Anlageabschnitt liegen. Der Anlageabschnitt des Winkelteils, an dem das Außenrohr angebracht ist, weist vorzugsweise mindestens ein, vorzugsweise zwei Löcher auf, die innerhalb der Innenkontur des Außenrohres an der Schnittstelle zu dem Anlageabschnitt liegen.

Das Klemmelement und das Gegenklemmelement sind bevorzugt miteinander durch zumindest eine Schraubverbindung verbindbar. Eine solche Schraubverbindung kann beispielsweise Schrauben, Gewindestangen, Bolzen mit Gewindeabschnitten, Rundbolzen mit Gewindestangen oder dergleichen umfassen.

Zusätzlich oder alternativ können das Klemmelement und das Gegenklemmelement durch ein Schwenkgelenk verbunden sein und durch ein Verschwenken (und ggf. ein zusätzliches Verschrauben) verklemmt werden.

Der Querschnitt des Außenelements bzw. des Außenrohres und der Querschnitt des Innenelements, also der Stange oder des Innenrohres sind beliebig; der Querschnitt kann rund, eckig, oval oder anders geformt sein. Ein kreisrunder Querschnitt wird jedoch als vorteilhaft angesehen.

Die Erfindung bezieht sich außerdem auf einen Antennenhalter mit einer Montagebasis, einem Antennenmast und Haltemitteln zur Befestigung des Antennenmastes an der Montagebasis, wobei die Montagebasis wenigstens zwei ineinandergreifende Schiebeelemente, und zwar ein Außenelement, das durch ein Außenrohr gebildet ist, und ein Innenelement, das durch ein in das Außenrohr eingreifendes Innenrohr oder eine in das Außenrohr eingreifende Stange gebildet ist, umfasst, wobei die Haltemittel ein Klemmelement und ein Gegenklemmelement aufweisen, die derart miteinander verbindbar sind, dass das Klemmelement und das Gegenklemmelement einen Abschnitt der Montagebasis einklemmen, und wobei der Mastfuß an dem Klemmelement angebracht ist,
dadurch gekennzeichnet, dass
die Montagebasis an ihren Enden zur Montage an benachbarten Dachsparren jeweils ein Halteelement aufweist, wobei eines der Halteelemente an dem dem Antennenmast abgewandten Ende des Außenrohres und das andere Halteelement an dem dem Antennenmast abgewandten Ende des Innenelements angebracht ist, wobei die Halteelemente Winkelteile sind, die jeweils einen Auflageabschnitt zur Auflage auf dem zugeordneten Dachsparren und jeweils einen Anlageabschnitt zur seitlichen Anlage an dem zugeordneten Dachsparren aufweisen.

Als vorteilhaft wird es angesehen, wenn der Auflageabschnitt und der Anlageabschnitt durch eine Biegekante getrennt sind und die Mittenachse des Außenrohres und/oder die des Innenelements zu dem Auflageabschnitt einen Abstand aufweist, der zwischen dem 0,3-fachen und dem 1,5-fachen, besonders bevorzugt zwischen dem 0,5-fachen und dem 1,0-fachen, der Tiefe des Klemmelements liegt, wobei die Tiefe entlang derjenigen Richtung gesehen wird, die senkrecht zur Längsrichtung des Außenrohres der Montagebasis und senkrecht zur Längsrichtung des Antennenmastes liegt. Im Falle einer solchen Dimensionierung wird eine optimale Platzierung des Antennenhalters im Dachraum unterhalb der Dachziegel erreicht.

Auch ist es vorteilhaft, wenn der Anlageabschnitt des Winkelteils, an dem das Innenrohr angebracht ist, mindestens ein, vorzugsweise zwei Löcher aufweist, die innerhalb der Innenkontur des Innenrohres an der Schnittstelle zu dem Anlageabschnitt liegen, und/oder der Anlageabschnitt des Winkelteils, an dem das Außenrohr angebracht ist, mindestens ein, vorzugsweise zwei Löcher aufweist, die innerhalb der Innenkontur des Außenrohres an der Schnittstelle zu dem Anlageabschnitt liegen.

Die Erfindung wird nachfolgend anhand von Ausführungsbeispielen näher erläutert; dabei zeigen beispielhaft:
- Figur 1: ein Ausführungsbeispiel für einen erfindungsgemäßen Antennenhalter nach einer Montage auf zwei benachbarten Dachsparren,
- Figur 2: den Antennenhalter gemäß Figur 1 in einer anderen Sicht schräg von der Seite,
- Figur 3: ein Ausführungsbeispiel für ein Klemmelement für den Antennenhalter gemäß Figur 1 in einer dreidimensionalen Sicht schräg von der Seite,
- Figur 4: das Klemmelement gemäß Figur 3 in einer Draufsicht,
- Figur 5: das Klemmelement gemäß den Figuren 3 und 4 in einer Sicht von der Seite, und zwar in einer Sicht senkrecht zur Längsrichtung der Montagebasis,
- Figur 6: das Klemmelement gemäß den Figuren 3 bis 5 in einer Sicht von vorn, und zwar in einer Sicht entlang der Längsrichtung der Montagebasis gemäß Figur 1,
- Figur 7: ein Ausführungsbeispiel für ein Winkelteil für den Antennenhalter gemäß Figur 1 in einer seitlichen Sicht,
- Figur 8: das Winkelteil gemäß Figur 7 in der Draufsicht,
- Figur 9: ein weiteres Ausführungsbeispiel für ein Gegenklemmelement, das bei dem Antennenhalter gemäß den Figuren 1 und 2 sowie 10 eingesetzt und beispielsweise mit dem Klemmelement gemäß den Figuren 1-6 und 10 verbaut werden kann, und
- Figur 10: ein weiteres Ausführungsbeispiel für einen erfindungsgemäßen Antennenhalter nach einer Montage auf zwei benachbarten Dachsparren.

In den Figuren werden der Übersicht halber für identische oder vergleichbare Komponenten stets dieselben Bezugszeichen verwendet.

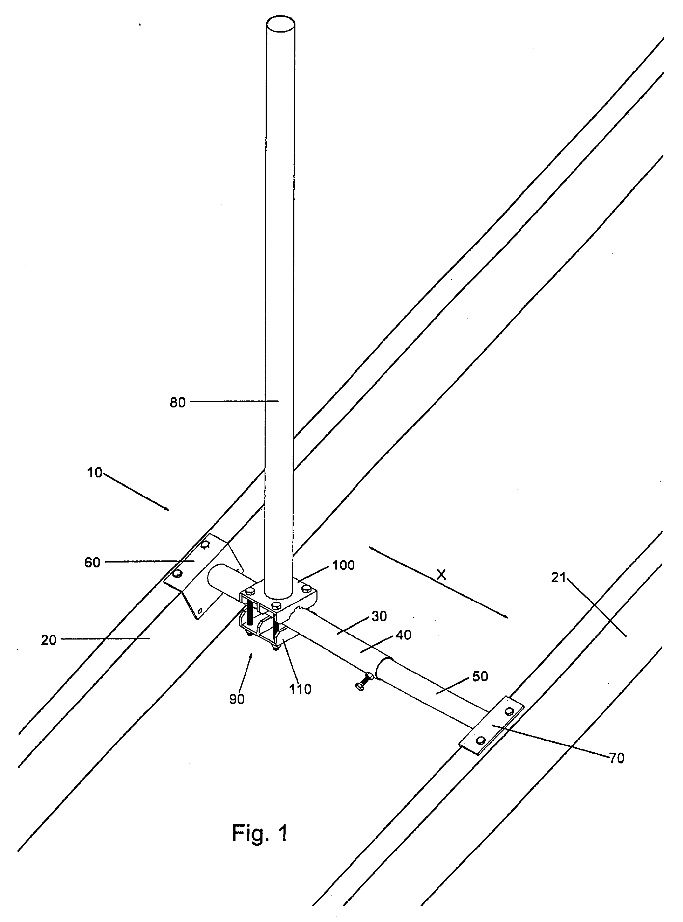

Die Figur 1 zeigt einen Antennenhalter 10, der auf zwei benachbarten parallelen Dachsparren 20 und 21 aufgeschraubt ist. Der Antennenhalter 10 weist eine Montagebasis 30 auf, die ein Außenrohr 40 und ein in dem Außenrohr 40 verschiebbar gehaltenes Innenrohr 50 umfasst. Durch Ineinanderschieben des Innenrohrs 50 und des Außenrohrs 40 lässt sich die Länge der Montagebasis 30 entlang der Längsrichtung X der Rohre 40 und 50 verändern, wodurch eine Anpassung des Antennenhalters 10 an unterschiedliche Dachsparrenabstände möglich ist.

Zur Befestigung der Montagebasis 30 an den beiden Dachsparren 20 und 21 sind Halteelemente in Form von Winkelteilen 60 und 70 vorhanden, die ein Aufschrauben des Antennenhalters 10 auf den Dachsparren 20 und 21 ermöglichen.

Zur Anbindung des Antennenmastes 80 an der Montagebasis 30 sind Haltemittel 90 vorgesehen, die ein oberes Klemmelement 100 und ein unteres Gegenklemmelement 110 umfassen. Das obere Klemmelement 100 ist mit dem unteren Gegenklemmelement 110 mittels Schraubverbindungen verbunden, die ein Einklemmen der Montagebasis 30 zwischen dem oberen Klemmelement 100 und dem unteren Klemmelement 110 durch Festschrauben ermöglichen.

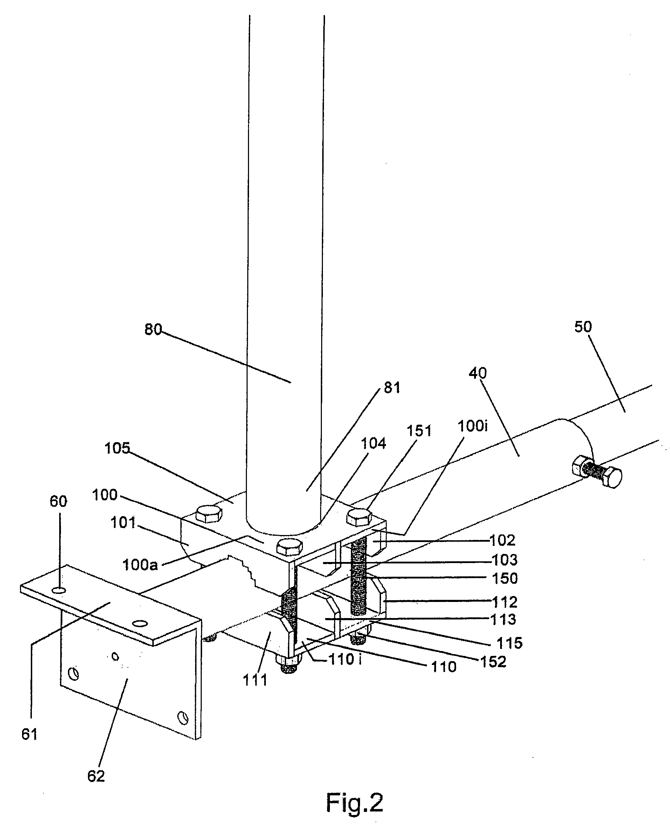

Die Figur 2 zeigt Bestandteile des Antennenhalters 10 gemäß Figur 1 in einer anderen Darstellung näher im Detail. Man erkennt, dass das Klemmelement 100 zwei parallele Endabschnitte 101 und 102 aufweist, die sich in einem Winkel (90° oder zumindest näherungsweise 90°) von der Innenseite 100i einer Trägerplatte 105 des Klemmelements 100 in Richtung auf das Außenrohr 40 der Montagebasis 30 erstrecken. Mittig zwischen den beiden parallelen Endabschnitten 101 und 102 befindet sich ein Stützelement 103, das durch eine Platte gebildet ist. Das Stützelement 103 bzw. die Platte erstreckt sich in einem rechten Winkel von der Innenseite 100i des Klemmelements 100 bzw. von der Innenseite der Trägerplatte 105 des Klemmelements 100 in Richtung des Außenrohrs 40 und stützt sich auf diesem ab.

Die Anordnung des Stützelements 103 ist derart gewählt, dass sich dieses unterhalb des Mastfußes 81 des Antennenmasts 80 befindet, so dass sich bei einem Anziehen von Schraubverbindungen 150, die das Klemmelement 100 mit dem Gegenklemmelement 110 verbinden, das Stützelement 103 unterhalb des Mastfußes 81 auf der Montagebasis abstützt und somit eine optimale Kraftübertragung zwischen dem Klemmelement 100 und der Montagebasis 30 im Bereich unterhalb des Mastfußes 81 erreicht wird.

Das Klemmelement 100 und das Stützelement 103 können Abschnitte eines einteiligen Bauteils, beispielsweise eines Gussteils oder eines Strangpressprofilteils sein. Alternativ kann das Stützelement 103 durch eine separate Platte gebildet sein, die an der Innenseite 100i des Klemmelements 100 bzw. der Innenseite der Trägerplatte 105 angebracht, insbesondere angeschweißt ist.

Die Schraubverbindungen 150 weisen bei dem Ausführungsbeispiel gemäß Figur 2 Schrauben 151 und Muttern 152 auf; alternativ sind auch andere Arten von Schraubverbindungen möglich, beispielsweise auf der Basis von Gewindestangen oder dergleichen. Darüber hinaus können das Klemmelement 100 und das Gegenklemmelement 110 auch mittels weiterer Komponenten miteinander in Verbindung stehen, beispielsweise mittels eines Schwenkgelenks, das ein Verschwenken zwischen dem Klemmelement 100 und dem Gegenklemmelement 110 beim Anbringen der beiden Elemente an der Montagebasis 30 ermöglicht.

Die Figur 2 zeigt darüber hinaus die Ausgestaltung des Gegenklemmelements 110 beispielhaft näher im Detail. Man erkennt zwei parallele Endabschnitte 111 und 112, die sich von der Innenseite 110i des Gegenklemmelements 110, und zwar von der Innenseite einer Trägerplatte 115 des Gegenklemmelements 110 in einem rechten Winkel in Richtung Montagebasis 30 erstrecken und sich auf dieser abstützen. Zwischen den beiden parallelen Endabschnitten 111 und 112 ist ein Gegenstützelement 113 angeordnet, das durch eine Platte gebildet ist. Die Platte bzw. das Gegenstützelement 113 erstreckt sich senkrecht von der Innenseite 110i des Gegenklemmelements 110 bzw. von der Innenseite einer Trägerplatte 115 des Gegenklemmelements 110 in Richtung der Montagebasis 30 und stützt sich auf dieser ab.

Das Gegenstützelement 113 und das Stützelement 103 liegen einander gegenüber und fluchten in Längsrichtung des Antennenmasts 80 gesehen, so dass bei einem Anziehen der Schraubverbindungen 150 das Stützelement 103 und das Gegenstützelement 113 lokal eine sehr hohe Anpresskraft auf gegenüberliegenden Seiten unterhalb des Mastfußes 81 auf die Montagebasis 30 ausüben. Aufgrund der Anordnung des Stützelements 103 und des Gegenstützelements 113 unterhalb des Mastfußes 81 wird durch das Stützelement 103 und das Gegenstützelement 113 eine besonders hohe Verdrehfestigkeit des Antennenmastes 80 relativ zur Montagebasis 30 erreicht. Darüber hinaus gewährleisten das Stützelement 103 und das Gegenstützelement 113, dass es zu keinem Durchbiegen oder Durchwölben des Klemmelements 100 und des Gegenklemmelements 110 bzw. der Trägerplatten 105 und 115 beim Anziehen der Schraubverbindungen 150 im Bereich des Mastfußes 81 kommt.

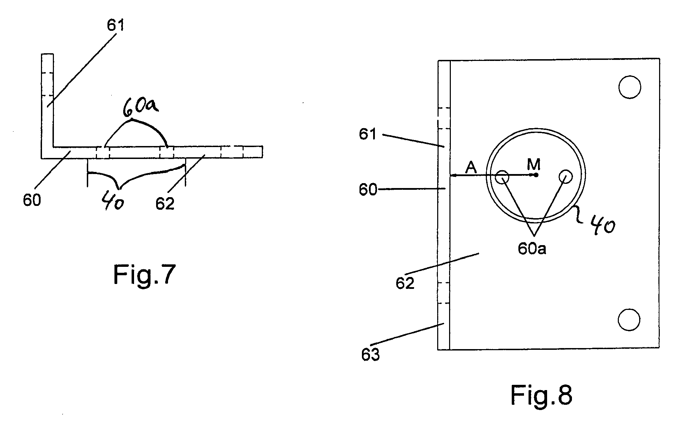

Die Figur 2 zeigt darüber hinaus die Ausgestaltung des Winkelteils 60 näher im Detail. Man erkennt einen Auflageabschnitt 61, der zur Auflage des Winkelteils 60 auf dem Dachsparren 20 dient, und einen Anlageabschnitt 62, der seitlich an dem Dachsparren 20 gemäß Figur 1 anliegt. Zum Anschrauben des Auflageabschnitts 61 und des Anlageabschnitts 62 sind Bohrungen vorhanden, durch die Schrauben hindurchgeführt werden können. Die Anbindung der Montagebasis 30 bzw. des Außenrohrs 40 an dem Winkelteil 60 wird weiter unten im Zusammenhang mit den Figuren 7 und 8 näher im Detail erläutert.

Das Winkelteil 70 gemäß Figur 1 kann von seinem Aufbau her dem Winkelteil 60 gemäß Figur 2 entsprechen bzw. mit diesem identisch sein.

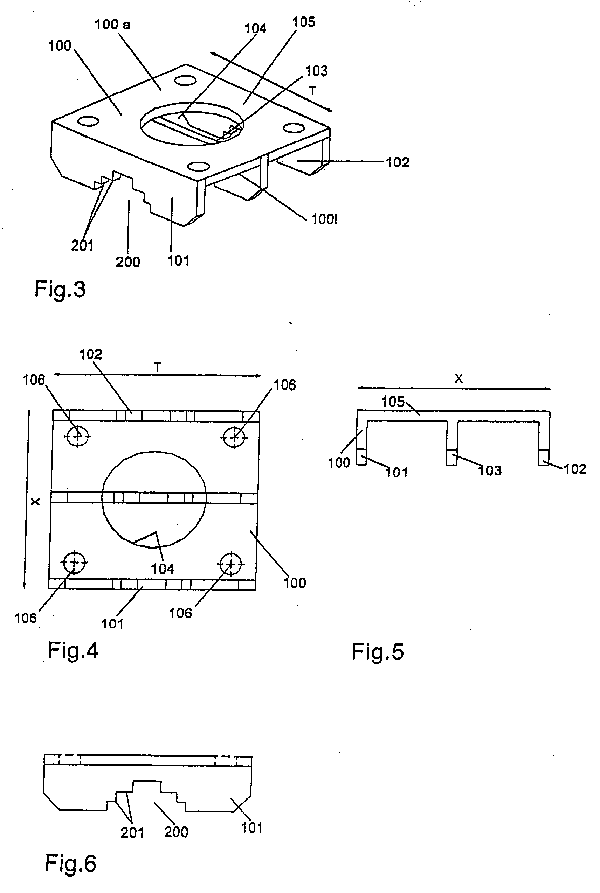

Die Figur 3 zeigt das Klemmelement 100 gemäß Figur 2 näher im Detail. Man erkennt die beiden parallelen Endabschnitte 101 und 102 sowie das zwischen den beiden Endabschnitten angeordnete Stützelement 103.

Zur Anbindung des Mastfußes 81 des Antennenmasts 80 (vgl. Figur 2) weist das Klemmelement 100 ein Durchgangsloch 104 auf, das ein Durchschieben des Mastfußes 81 durch die obere Trägerplatte 105 des Klemmelements 100 ermöglicht. Zur Montage des Antennenmastes 80 wird der Mastfuß 81 durch das Durchgangsloch 104 hindurchgeschoben, bis er auf das unter dem Durchgangsloch 104 befindliche Stützelement 103 stößt. Anschließend wird der Mastfuß 81 in dieser Position befestigt, beispielsweise verschweißt.

Als besonders vorteilhaft wird es angesehen, wenn der Mastfuß 81 sowohl auf der Außenseite 100a des Klemmelements 100 als auch auf der Innenseite 100i des Klemmelements 100 befestigt, insbesondere verschweißt ist. Außerdem wird der Mastfuß 81 vorzugsweise auch mit dem Stützelement 103 verbunden, beispielsweise verschweißt. Mit anderen Worten ist es also möglich, den Mastfuß 81 an drei Schnittstellen anzubinden, nämlich auf der Außenseite 100a, der Innenseite 100i sowie dem Stützelement 103.

Die Figur 3 zeigt darüber hinaus die Ausgestaltung des parallelen Endabschnitts 101 näher im Detail. Man erkennt eine Aussparung 200, die Vorsprünge 201, beispielsweise zackenförmige Vorsprünge, aufweist. Die Vorsprünge 201 werden durch die Stufenförmigkeit der Aussparung 200 gebildet.

Wird der Endabschnitt 101 auf die Montagebasis 30 aufgesetzt, so liegen die Vorsprünge 201 auf der Montagebasis auf, so dass es bei einem Anziehen der Schraubverbindungen 150 gemäß Figur 2 zu einem Einpressen der Vorsprünge 201 in die Montagebasis kommt. Durch das Eindrücken der Vorsprünge 201 in das Außenrohr 40 der Montagebasis 30 kommt es zu einer formschlüssigen Verbindung und darüber hinaus vorzugsweise zu einem Verklemmen zwischen dem Außenrohr 40 und dem darin befindlichen Innenrohr 50, sobald nämlich die Vorsprünge 201 das Material des Außenrohres 40 derart deformieren, dass dieses auf das Innenrohr 50 gepresst wird.

Das Stützelement 103 sowie der parallele Endabschnitt 102 sind mit entsprechenden Aussparungen bzw. Ausnehmungen 200 sowie entsprechenden Vorsprüngen 201 versehen, so dass auch das Stützelement 103 sowie der Endabschnitt 102 ein Verklemmen zwischen dem Außenrohr 40 und dem Innenrohr 50 bei einem Anziehen der Schraubverbindungen 150 gemäß Figur 2 bewirken können. Die Aussparungen und Vorsprünge im Stützelement 103 und im parallelen Endabschnitt 102 fluchten vorzugsweise mit denen des Endabschnitts 101 in Längsrichtung X der Montagebasis 30 gesehen (vgl. Fig. 1).

Die Figur 4 zeigt das Klemmelement 100 mit dem Stützelement 103 gemäß Figur 3 näher in einer Draufsicht. Man erkennt das Durchgangsloch 104, durch das der Mastfuß 81 hindurch in Richtung auf das unter dem Durchgangsloch 104 befindliche Stützelement 103 geschoben werden kann. Darüber hinaus sind Bohrungen 106 erkennbar, durch die die in Figur 2 gezeigten Schrauben 151 der Schraubverbindungen 150 hindurchgeführt werden können.

Die Figur 5 zeigt das Klemmelement 100 mit dem Stützelement 103 in einer Sicht von der Seite. Es lässt sich erkennen, dass das Stützelement 103 mittig zwischen den beiden parallelen Endabschnitten 101 und 102 des Klemmelements 100 angeordnet ist.

Die Figur 6 zeigt das Klemmelement 100 mit dem daran angebrachten Stützelement 103 in einer Sicht von vorn, gesehen entlang der Längsrichtung X der Montagebasis 30 (vgl. Figur 1). Es lässt sich erkennen, dass die stufenförmige Aussparung 200 sowie die Vorsprünge 201 des Endabschnitts 101 mit denen des Endabschnitts 102 und des Stützelements 103 fluchten. Wird bei der Montage die Aussparung 200 auf die Montagebasis 30 aufgesetzt, so werden bei einem Anziehen der Schraubverbindungen 150 gemäß Figur 2 die Vorsprünge 201 der beiden Endabschnitte 101 und 102 sowie die Vorsprünge 201 des Stützelements 103 in die Montagebasis 30 eindrücken und zu einer Deformation des Außenrohrs 40 und zu einem Verklemmen des Außenrohrs 40 mit dem darin befindlichen Innenrohr 50 führen. Um dieses Verklemmen zu gewährleisten, ist die Länge des Innenrohres 50 derart gewählt, dass sich dieses bis unterhalb der Haltemittel 90 (vgl. Figur 1) in das Außenrohr 40 hineinerstreckt. Das Klemmelement 100 und das Gegenklemmelement 110 sind vorzugsweise auf dem Außenrohr 40 aufgesetzt.

Die Figur 7 zeigt ein Ausführungsbeispiel für das Winkelteil 60 gemäß Figur 2. Man erkennt den Auflageabschnitt 61 sowie den Anlageabschnitt 62 in einer Sicht von der Seite.

Die Figur 8 zeigt das Winkelteil 60 gemäß Figur 7 in einer Draufsicht, nachdem das Außenrohr 40 der Montagebasis 30 gemäß Figur 2 angebracht worden ist. Es lässt sich erkennen, dass das Winkelteil 60 im Schnittstellenbereich zu dem Außenrohr 40 mit zwei Löchern 60a versehen ist, die innerhalb der Innenkontur des Außenrohrs 40 liegen. Die Funktion der Löcher 60a besteht darin, eine Feuerverzinkung des Außenrohrs 40 nach einem Anschweißen des Winkelteils 60 an dem Außenrohr 40 zu vereinfachen.

Auch lässt sich erkennen, dass der Auflageabschnitt 61 und der Anlageabschnitt 62 durch eine Biegekante 63 getrennt sind. Die Mittenachse M des an dem Winkelteil 60 angebrachten Außenrohres 40 weist einen Abstand A zu dem Auflageabschnitt 61 und der Biegekante 63 auf, der zwischen dem 0,3-fachen und dem 1,5-fachen, besonders bevorzugt zwischen dem 0,5-fachen und dem 1,0-fachen, der Tiefe T des Klemmelements (vgl. Figur 3 und 4) liegt, wobei die Tiefe T entlang derjenigen Richtung gesehen wird, die senkrecht zur Längsrichtung des Außenrohres 40 der Montagebasis und senkrecht zur Längsrichtung des Antennenmastes 80 liegt. Im Falle einer solchen Dimensionierung wird eine optimale Platzierung des Antennenhalters im Dachraum unterhalb der Dachziegel erreicht.

Das Winkelteil 70 gemäß Figur 1 ist vorzugsweise mit dem Winkelteil 60 identisch. Auch das Winkelteil 70 weist somit vorzugsweise zwei Löcher auf, die innerhalb der Innenkontur des daran angebrachten Innenrohrs 50 liegen. Bei dem Winkelteil 70 ist vorzugsweise vorgesehen, dass die Mittenachse des an dem Winkelteil 70 angebrachten Innenrohres 50 einen Abstand zu dem Auflageabschnitt und der Biegekante aufweist, der zwischen dem 0,3-fachen und dem 1,5-fachen, besonders bevorzugt zwischen dem 0,5-fachen und dem 1,0-fachen, der Tiefe T des Klemmelements (vgl. Figur 3 und 4) liegt.

Das Gegenklemmelement 110 gemäß Figur 2 ist vorzugsweise mit dem Klemmelement 100 gemäß den Figuren 3 bis 6 baugleich mit dem einzigen Unterschied, dass bei dem Gegenklemmelement 110 das Durchgangsloch 104, das bei dem Klemmelement 100 für den Mastfuß 81 vorgesehen ist, fehlen kann.

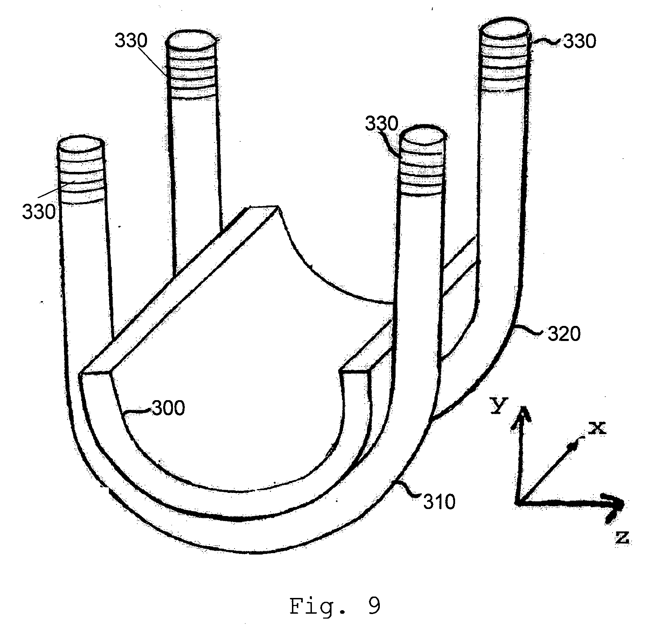

Eine alternative Ausgestaltung für das Gegenklemmelement 110 ist in der Figur 9 dargestellt. Man erkennt ein Rinnenteil (rinnenförmiges Teil) 300, das zur Auflage auf der Unterseite des Außenrohrs 40 der Montagebasis 30 gemäß Figur 2 bestimmt ist. Das Rinnenteil 300 wird von Fixierelementen 310 und 320 gehalten. Die Fixierelemente 310 und 320 sind durch U-förmig gebogene Stangen gebildet, die an ihren Enden jeweils mit einem Gewinde 330 versehen sind.

Durch ein Verschrauben mit einem Klemmelement, beispielsweise dem Klemmelement 100 gemäß den Figuren 1 und 2, wird das Rinnenteil 300 in Richtung auf die Unterseite der Montagebasis 30 gezogen, wodurch es zu einem Einklemmen der Montagebasis 30 kommt.

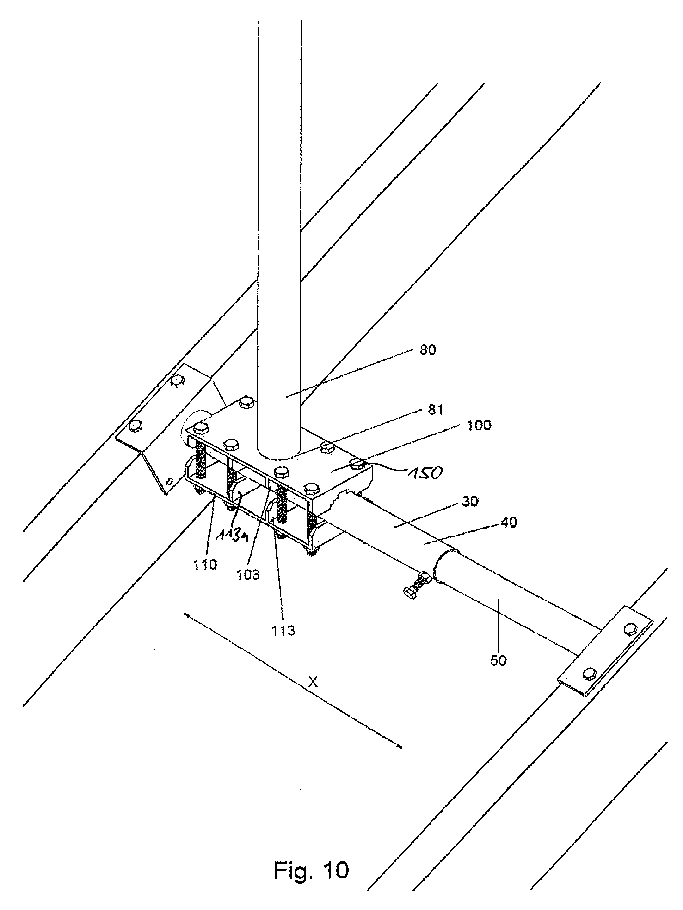

Die Figur 10 zeigt ein weiteres Ausführungsbeispiel für einen Antennenhalter 10, der ein Klemmelement 100 und ein Gegenklemmelement 110 aufweist. Im Unterschied zu dem Ausführungsbeispiel gemäß den Figuren 1 bis 8 sind zwei Stützelemente und zwei Gegenstützelemente 113 und 113a nicht unmittelbar unter dem Mastfuß 81 angeordnet, sondern in Längsrichtung X der Montagebasis 30 bzw. des Außenrohres 40 versetzt. Außerdem ist die Anzahl der Schraubverbindungen 150 größer; sie beträgt hier acht statt beispielsweise vier. Übrigen gelten die obigen Ausführungen entsprechend.

### Bezugszeichenliste

- 10: Antennenhalter
- 20: Dachsparren
- 21: Dachsparren
- 30: Montagebasis
- 40: Außenrohr
- 50: Innenrohr
- 60: Winkelteil
- 60a: Löcher
- 61: Auflageabschnitt
- 62: Anlageabschnitt
- 63: Biegekante
- 70: Winkelteil
- 80: Antennenmast
- 81: Mastfuß
- 90: Haltemittel
- 100: oberes Klemmelement
- 100a: Außenseite
- 100i: Innenseite
- 101: Endabschnitt
- 102: Endabschnitt
- 103: Stützelement
- 104: Durchgangsloch
- 105: Trägerplatte
- 106: Bohrungen
- 110: unteres Gegenklemmelement
- 110i: Innenseite
- 111: Endabschnitt
- 112: Endabschnitt
- 113: Gegenstützelement
- 115: Trägerplatte
- 150: Schraubverbindung
- 151: Schraube
- 152: Mutter
- 200: Aussparung
- 201: Vorsprung
- 300: Rinnenteil
- 310: Fixierelement
- 320: Fixierelement
- 330: Gewinde

- A: Abstand
- M: Mittenachse
- T: Tiefe
- X: Längsrichtung

## Patentansprüche

1. Antennenhalter (10) mit einer Montagebasis (30), einem Antennenmast (80) und Haltemitteln (90) zur Befestigung des Antennenmastes (80) an der Montagebasis (30),
- wobei die Montagebasis (30) wenigstens zwei ineinandergreifende Schiebeelemente, und zwar ein Außenelement, das durch ein Außenrohr (40) gebildet ist, und ein Innenelement, das durch ein in das Außenrohr (40) eingreifendes Innenrohr (50) oder eine in das Außenrohr (40) eingreifende Stange gebildet ist, umfasst,
- wobei die Haltemittel (90) ein Klemmelement (100) und ein Gegenklemmelement (110) aufweisen, die derart miteinander verbindbar sind, dass das Klemmelement (100) und das Gegenklemmelement (110) einen Abschnitt der Montagebasis (30) einklemmen, und
- wobei der Mastfuß (81) an dem Klemmelement (100) angebracht ist,
**dadurch gekennzeichnet, dass**
- das Gegenklemmelement (110) zwei parallele Endabschnitte (111,112) aufweist, die jeweils eine äußere Stützwand bilden und sich auf der Montagebasis (30) abstützen,
- auf der Innenseite (110i) des Gegenklemmelements (110) mindestens ein Gegenstützelement (113) angeordnet ist, das sich in Richtung Montagebasis (30) erstreckt und sich auf der Montagebasis (30) abstützt,
- das mindestens eine Gegenstützelement (113) und das Gegenklemmelement (110) durch Abschnitte eines einteiligen Bauteils, vorzugsweise eines Gussteiles oder eines Strangpressprofilbauteils, gebildet sind oder das Gegenstützelement (113) an das Gegenklemmelement (110) angeschweißt ist und
- das mindestens eine Gegenstützelement im Bereich einer Aussparung mit einem oder mehreren zackenförmigen Vorsprüngen versehen ist, die in Richtung Montagebasis gerichtet sind und bei einem Einklemmen der Montagebasis zwischen dem Klemmelement und dem Gegenklemmelement in die Montagebasis eingedrückt werden.

2. Antennenhalter (10) nach Anspruch 1,
**dadurch gekennzeichnet, dass**
das mindestens eine Gegenstützelement (113) - entlang der Mastlängsrichtung in Richtung Montagebasis (30) gesehen - unterhalb des Mastfußes (81) angeordnet ist und sich in Richtung Mastfuß (81) erstreckt.

3. Antennenhalter (10) nach Anspruch 1 oder 2,
**dadurch gekennzeichnet, dass**
das Klemmelement (100) im Bereich des Mastfußes (81) ein Durchgangsloch (104) aufweist, in das der Mastfuß (81) zumindest eingeführt ist oder durch das der Mastfuß (81) hindurchgeführt ist.

4. Antennenhalter (10) nach Anspruch 3,
**dadurch gekennzeichnet, dass**
das mindestens eine Gegenstützelement (113) - entlang der Mastlängsrichtung in Richtung Montagebasis (30) gesehen - unterhalb des Durchgangsloches (104) liegt und sich in Richtung Durchgangsloch (104) erstreckt.

5. Antennenhalter (10) nach einem der voranstehenden Ansprüche,
**dadurch gekennzeichnet, dass**
das Gegenklemmelement (110) durch ein Bauteil gebildet ist.

6. Antennenhalter (10) nach einem der voranstehenden Ansprüche,
**dadurch gekennzeichnet, dass**
das Gegenstützelement (113) durch eine Platte gebildet ist, die in einem rechten Winkel auf der der Montagebasis (30) zugewandten Innenseite (110i) des Gegenklemmelements (110), insbesondere in einem rechten Winkel von der Innenseite einer zu der Montagebasis (30) parallelen Trägerplatte des Gegenklemmelements (110), angeformt oder angebracht, insbesondere angeschweißt, ist.

7. Antennenhalter (10) nach einem der voranstehenden Ansprüche,
**dadurch gekennzeichnet, dass**
das mindestens eine Gegenstützelement (113) durch eine Platte gebildet ist, die parallel zwischen den zwei parallelen Endabschnitten (111, 112) des Gegenklemmelements (110) liegt.

8. Antennenhalter (10) nach einem der voranstehenden Ansprüche,
**dadurch gekennzeichnet, dass**
das mindestens eine Gegenstützelement (113) mittig zwischen den zwei parallelen Endabschnitten (111, 112) des Gegenklemmelements (110) angeordnet ist.

9. Antennenhalter (10) nach einem der voranstehenden Ansprüche,
**dadurch gekennzeichnet, dass**
der Innendurchmesser des Außenrohres (40) der Montagebasis (30) und der Außendurchmesser des Innenelements der Montagebasis (30) derart aufeinander abgestimmt sind, dass das Innenelement im Außenrohr (40) spielfrei, zumindest weitgehend spielfrei, beweglich ist und dass beim Verklemmen der Montagebasis (30) zwischen dem Klemmelement (100) und dem Gegenklemmelement (110) durch ein Verformen der Montagebasis (30) das Innenelement und das Außenrohr (40) derart miteinander verklemmt werden, dass sie relativ zueinander fixiert werden.

10. Antennenhalter (10) nach einem der voranstehenden Ansprüche,
**dadurch gekennzeichnet, dass**
das mindestens eine Gegenstützelement (113) und/oder die zwei umgebogenen parallelen Endabschnitte des Gegenklemmelements (110) mindestens einen Vorsprung (201) aufweisen, der bei einem Verklemmen der Montagebasis (30) zwischen dem Klemmelement (100) und dem Gegenklemmelement (110) in das Außenrohr (40) hineingedrückt wird.

11. Antennenhalter (10) nach Anspruch 10,
**dadurch gekennzeichnet, dass**
der oder die Vorsprünge (201) des mindestens einen Gegenstützelements (113) bei einem Verklemmen der Montagebasis (30) zwischen dem Klemmelement (100) und dem Gegenklemmelement (110) derart in das Außenrohr (40) hineingedrückt werden, dass sie das Außenrohr (40) und das Innenelement unterhalb des Mastfußes (81) miteinander verklemmen.

12. Antennenhalter (10) nach einem der voranstehenden Ansprüche,
**dadurch gekennzeichnet, dass**
die Montagebasis (30) an ihren Enden zur Montage an benachbarten Dachsparren (20) jeweils ein Halteelement aufweist, wobei eines der Halteelemente an dem dem Antennenmast (80) abgewandten Ende des Außenrohres (40) und das andere Halteelement an dem dem Antennenmast (80) abgewandten Ende des Innenelements angebracht ist.

13. Antennenhalter (10) nach einem der voranstehenden Ansprüche,
**dadurch gekennzeichnet, dass**
- die Halteelemente (90) Winkelteile (60, 70) sind, die jeweils einen Auflageabschnitt (61) zur Auflage auf dem zugeordneten Dachsparren (20) und jeweils einen Anlageabschnitt (62) zur seitlichen Anlage an dem zugeordneten Dachsparren (20) aufweisen,
- wobei der Auflageabschnitt (61) und der Anlageabschnitt (62) durch eine Biegekante (63) getrennt sind und
- wobei die Mittenachse (M) des Außenrohres (40) und/oder die des Innenelements einen Abstand (A) zu dem Auflageabschnitt (61) aufweist, der zwischen dem 0,3-fachen und dem 1,5-fachen der Tiefe (T) des Klemmelements (100) liegt, wobei die Tiefe (T) entlang derjenigen Richtung gesehen wird, die senkrecht zur Längsrichtung des Außenrohres (40) der Montagebasis (30) und senkrecht zur Längsrichtung des Antennenmastes (80) liegt.

14. Antennenhalter (10) nach einem der voranstehenden Ansprüche,
**dadurch gekennzeichnet, dass**
- der Anlageabschnitt (62) des Winkelteils, an dem das Innenrohr (50) angebracht ist, mindestens ein, vorzugsweise zwei Löcher aufweist, die innerhalb der Innenkontur des Innenrohres (50) an der Schnittstelle zu dem Anlageabschnitt (62) liegen, und/oder
- der Anlageabschnitt (62) des Winkelteils, an dem das Außenrohr (40) angebracht ist, mindestens ein, vorzugsweise zwei Löcher aufweist, die innerhalb der Innenkontur des Außenrohres (40) an der Schnittstelle zu dem Anlageabschnitt (62) liegen.

## Claims

1. Antenna holder (10) having an assembly base (30), an antenna mast (80), and mounting means (90) for fastening the antenna mast (80) to the assembly base (30),
- wherein the assembly base (30) comprises at least two mutually engaging sliding elements, specifically one external element which is formed by an external tube (40), and one internal element which is formed by an internal tube (50), which engages into the external tube (40), or by a rod which engages into the external tube (40);
- wherein the mounting means (90) have a clamping element (100) and a counter-clamping element (110) which are interconnectable in such a manner that the clamping element (100) and the counter-clamping element (110) jam a portion of the assembly base (30); and
- wherein the mast foot (81) is attached to the clamping element (100);
**characterized in that**
- the counter-clamping element (110) has two parallel end portions (111, 112) which each form an external support wall and are supported on the assembly base (30);
- at least one counter-support element (113) which extends in the direction of the assembly base (30) and is supported on the assembly plate (30) is disposed on the internal side (110i) of the counter-clamping element (110);
- the at least one counter-support element (113) and the counter-clamping element (110) are formed by portions of an integral component, preferably of a casting or of an extruded section, or the counter-support element (113) is welded to the counter-clamping element (110); and
- the at least one counter-support element in the region of a clearance is provided with one or a plurality of serrated protrusions which is/are directed towards the assembly base and is/are pushed into the assembly base when the assembly base is jammed between the clamping element and the counter-clamping element.

2. Antenna holder (10) according to Claim 1,
**characterized in that**
the at least one counter-support element (113), when viewed along the longitudinal mast direction towards the assembly base (30), is disposed below the mast foot (81) and extends in the direction towards the mast foot (81).

3. Antenna holder (10) according to Claim 1 or 2,
**characterized in that**
the clamping element (100) in the region of the mast foot (81) has a through bore (104) into which the mast foot (81) is at least inserted, or through which the mast foot (81) is routed.

4. Antenna holder (10) according to Claim 3,
**characterized in that**
the at least one counter-support element (113), when viewed along the longitudinal mast direction towards the assembly base (30), lies below the through bore (104) and extends in the direction towards the through bore (104).

5. Antenna holder (10) according to one of the preceding claims,
**characterized in that**
the counter-clamping element (110) is formed by a component.

6. Antenna holder (10) according to one of the preceding claims,
**characterized in that**
the counter-support element (113) is formed by a plate which, so as to be at a right angle, is moulded onto or attached to, in particular is welded to, that internal side (110i) of the counter-clamping element (110) that faces the assembly base (30), in particular so as to be at a right angle to the internal side of a support plate of the counter-clamping element (110) that is parallel with the assembly base (30).

7. Antenna holder (10) according to one of the preceding claims,
**characterized in that**
the at least one counter-support element (113) is formed by a plate which, so as to be parallel, lies between the two parallel end portions (111, 112) of the counter-clamping element (110).

8. Antenna holder (10) according to one of the preceding claims,
**characterized in that**
the at least one counter-support element (113) is centrically disposed between the two parallel end portions (111, 112) of the counter-clamping element (110).

9. Antenna holder (10) according to one of the preceding claims,
**characterized in that**
the internal diameter of the external tube (40) of the assembly base (30), and the external diameter of the internal element of the assembly base (30) are mutually adapted in such a manner that the internal element in the external tube (40) is movable free of clearance, at least largely free of clearance, and that, when the assembly base (30) is jammed between the clamping element (100) and the counter-clamping element (110), the internal element and the external tube (40) by deformation of the assembly base (30) are mutually jammed in such a manner that they are secured in relation to one another.

10. Antenna holder (10) according to one of the preceding claims,
**characterized in that**
the at least one counter-support element (113) and/or the two bent parallel end portions of the counter-clamping element (110) have at least one protrusion (201) which, when the assembly base (30) is jammed between the clamping element (100) and the counter-clamping element (110), is pushed into the external tube (40).

11. Antenna holder (10) according to Claim 10,
**characterized in that**
the protrusion or protrusions (201) of the at least one counter-support element (113), when the assembly base (30) is jammed between the clamping element (100) and the counter-clamping element (110), are pushed into the external tube (40) in such a manner that said protrusion or protrusions (201) below the mast foot (81) mutually jam the external tube (40) and the internal element.

12. Antenna holder (10) according to one of the preceding claims,
**characterized in that**
the assembly base (30) at each of the ends thereof, for the assembly on adjacent rafters (20), has one mounting element, wherein one of the mounting elements is attached on that end of the external tube (40) that faces away from the antenna mast (80), and the other mounting element is attached to that end of the internal element that faces away from the antenna mast (80).

13. Antenna holder (10) according to one of the preceding claims,
**characterized in that**
- the mounting elements (90) are angular parts (60, 70) which each have one bearing portion (61) for bearing onto the assigned rafter (20), and each have one bearing portion (62) for bearing laterally on the assigned rafter (20);
- wherein the bearing portion (61) and the bearing portion (62) are separated by a bending edge (63); and
- wherein the central axis (M) of the external tube (40) and/or of the internal element has a spacing (A) from the bearing portion (61) that is between 0.3 to 1.5 times the depth (T) of the clamping element (100), wherein the depth (T) is viewed along that direction that is perpendicular to the longitudinal direction of the external tube (40) of the assembly base (30) and is perpendicular to the longitudinal direction of the antenna mast (80).

14. Antenna holder (10) according to one of the preceding claims,
**characterized in that**
- the bearing portion (62) of the angular part to which the internal tube (50) is attached, has at least one, preferably two, bores which lie within the internal contour of the internal tube (50), at the interface to the bearing portion (62); and/or
- the bearing portion (62) of the angular part to which the external tube (40) is attached, has at least one, preferably two, bores which lie within the internal contour of the external tube (40), at the interface to the bearing portion (62).

## Revendications

1. Support d'antenne (10) comprenant une base de montage (30), un mât d'antenne (80) et des moyens de retenue (90) pour la fixation du mât d'antenne (80) à la base de montage (30),
- la base de montage (30) comprenant au moins deux éléments coulissants s'engageant l'un dans l'autre, à savoir un élément extérieur qui est formé par un tube extérieur (40), et un élément intérieur qui est formé par un tube intérieur (50) s'engageant dans le tube extérieur (40) ou par une tige s'engageant dans le tube extérieur (40),
- les moyens de retenue (90) présentant un élément de serrage (100) et un élément de serrage conjugué (110) qui peuvent être connectés l'un à l'autre de telle sorte que l'élément de serrage (100) et l'élément de serrage conjugué (110) serrent une portion de la base de montage (30), et
- le pied du mât (81) étant monté sur l'élément de serrage (100),
**caractérisé en ce que**
- l'élément de serrage conjugué (110) présente deux portions d'extrémité parallèles (111, 112) qui forment chacune une paroi de support extérieure et qui s'appuient sur la base de montage (30),
- au moins un élément de support conjugué (113) est disposé sur le côté intérieur (110i) de l'élément de serrage conjugué (110), lequel s'étend dans la direction de la base de montage (30) et s'appuie sur la base de montage (30),
- l'au moins un élément de support conjugué (113) et l'élément de serrage conjugué (110) sont formés par des portions d'un composant d'une seule pièce, de préférence d'une pièce moulée ou d'un composant profilé filé, ou l'élément de support conjugué (113) est soudé à l'élément de serrage conjugué (110) et
- l'au moins un élément de support conjugué est pourvu, dans la région d'un évidement, d'une ou plusieurs saillies en forme de dent, qui sont orientées dans la direction de la base de montage et qui, lors du serrage de la base de montage entre l'élément de serrage et l'élément de serrage conjugué, sont enfoncées dans la base de montage.

2. Support d'antenne (10) selon la revendication 1,
**caractérisé en ce que**
l'au moins un élément de support conjugué (113) - vu le long de la direction longitudinale du mât dans la direction de la base de montage (30) - est disposé en dessous du pied du mât (81) et s'étend dans la direction du pied du mât (81).

3. Support d'antenne (10) selon la revendication 1 ou 2,
**caractérisé en ce que**
l'élément de serrage (100) présente un trou traversant (104) dans la région du pied du mât (81), dans lequel est au moins introduit le pied du mât (81) ou à travers lequel est guidé le pied du mât (81).

4. Support d'antenne (10) selon la revendication 3,
**caractérisé en ce que**
l'au moins un élément de support conjugué (113) - vu le long de la direction longitudinale du mât dans la direction de la base de montage (30) - est situé en dessous du trou traversant (104) et s'étend dans la direction du trou traversant (104).

5. Support d'antenne (10) selon l'une quelconque des revendications précédentes,
**caractérisé en ce que**
l'élément de serrage conjugué (110) est formé par un composant.

6. Support d'antenne (10) selon l'une quelconque des revendications précédentes,
**caractérisé en ce que**
l'élément de support conjugué (113) est formé par une plaque qui est façonnée ou montée, en particulier qui est soudée, à angle droit sur le côté intérieur (110i) de l'élément de serrage conjugué (110) tourné vers la base de montage (30), en particulier à angle droit depuis le côté intérieur d'une plaque de support de l'élément de serrage conjugué (110) parallèle à la base de montage (30).

7. Support d'antenne (10) selon l'une quelconque des revendications précédentes,
**caractérisé en ce que**
l'au moins un élément de support conjugué (113) est formé par une plaque qui est située parallèlement entre les deux portions d'extrémité parallèles (111, 112) de l'élément de serrage conjugué (110).

8. Support d'antenne (10) selon l'une quelconque des revendications précédentes,
**caractérisé en ce que**
l'au moins un élément de support conjugué (113) est disposé centralement entre les deux portions d'extrémité parallèles (111, 112) de l'élément de serrage conjugué (110).

9. Support d'antenne (10) selon l'une quelconque des revendications précédentes,
**caractérisé en ce que**
le diamètre intérieur du tube extérieur (40) de la base de montage (30) et le diamètre extérieur de l'élément intérieur de la base de montage (30) sont adaptés l'un à l'autre de telle sorte que l'élément intérieur puisse être mobile dans le tube extérieur (40) sans jeu, au moins essentiellement sans jeu et que lors du serrage de la base de montage (30) entre l'élément de serrage (100) et l'élément de serrage conjugué (110), l'élément intérieur et le tube extérieur (40) soient serrés l'un avec l'autre par une déformation de la base de montage (30) de telle sorte qu'ils soient fixés l'un par rapport à l'autre.

10. Support d'antenne (10) selon l'une quelconque des revendications précédentes,
**caractérisé en ce que**
l'au moins un élément de support conjugué (113) et/ou les deux portions d'extrémités parallèles recourbées de l'élément de serrage conjugué (110) présentent au moins une saillie (201) qui, lors d'un serrage de la base de montage (30) entre l'élément de serrage (100) et l'élément de serrage conjugué (110), est enfoncée dans le tube extérieur (40).

11. Support d'antenne (10) selon la revendication 10,
**caractérisé en ce que**
la ou les saillies (201) de l'au moins un élément de support conjugué (113), lors d'un serrage de la base de montage (30) entre l'élément de serrage (100) et l'élément de serrage conjugué (110) sont enfoncées dans le tube extérieur (40) de telle sorte qu'elles serrent ensemble le tube extérieur (40) et l'élément intérieur en dessous du pied du mât (81).

12. Support d'antenne (10) selon l'une quelconque des revendications précédentes,
**caractérisé en ce que**
la base de montage (30) présente, au niveau de ses extrémités, pour le montage sur des chevrons adjacents (20) un élément de retenue respectif, l'un des éléments de retenue étant monté sur l'extrémité du tube extérieur (40) opposée au mât d'antenne (80) et l'autre élément de retenue étant monté sur l'extrémité de l'élément intérieur opposée au mât d'antenne (80).

13. Support d'antenne (10) selon l'une quelconque des revendications précédentes,
**caractérisé en ce que**
- les éléments de retenue (90) sont des pièces d'angle (60, 70) qui présentent à chaque fois une portion d'appui (61) pour l'appui sur le chevron associé (20) et à chaque fois une portion de butée (62) pour buter latéralement contre le chevron associé (20),
- la portion d'appui (61) et la portion de butée (62) étant séparées par une arête flexible (63) et
- l'axe médian (M) du tube extérieur (40) et/ou celui de l'élément intérieur présentant une distance (A) à la portion d'appui (61) qui correspond à entre 0,3 fois et 1,5 fois la profondeur (T) de l'élément de serrage (100), la profondeur (T) étant considérée le long de la direction qui est perpendiculaire à la direction longitudinale du tube extérieur (40) de la base de montage (30) et perpendiculaire à la direction longitudinale du mât d'antenne (80).

14. Support d'antenne (10) selon l'une quelconque des revendications précédentes,
**caractérisé en ce que**
- la portion de butée (62) de la pièce d'angle au niveau de laquelle est monté le tube intérieur (50) présente au moins un, de préférence deux trous qui sont situés à l'intérieur du contour intérieur du tube intérieur (50) au niveau de l'interface avec la portion de butée (62), et/ou
- la portion de butée (62) de la pièce d'angle au niveau de laquelle est monté le tube extérieur (40) présente au moins un, de préférence deux trous qui sont situés à l'intérieur du contour intérieur du tube extérieur (40) au niveau de l'interface avec la portion de butée (62).
